# FASCICULE DE BREVET EUROPEEN

(11) **EP 0 645 273 B1**
(45) Date de publication et mention de la délivrance du brevet: **16.04.1997**
(21) Numéro de dépôt: 94114487.5
(22) Date de dépôt: 15.09.1994
(51) Int. Cl.: B60K 15/04, B60K 15/00, B60K 15/05

(54) **Tête de remplissage pour une canalisation de remplissage d'un réservoir de carburant de véhicule automobile**
Tankverschlussdeckel für Kraftstoffeinfüllrohr eines Fahrzeuges
Fuel filler cap for vehicle fuel inlet pipe

(30) Priorité: 29.09.1993 FR 9311579
(43) Date de publication de la demande: 29.03.1995
(73) Titulaire: PAUL JOURNEE S.A., F-60240 Reilly (FR)
(72) Inventeur: Romanek, Christian, F-60430 Noailles (FR); Crepin, Christophe, F-95300 Pontoise (FR)
(74) Mandataire: Lemaire, Marc

(56) Documents cités:
- DE-C- 4 217 966
- FR-A- 2 529 532
- US-A- 5 071 018

## Description

La présente invention concerne une tête de remplissage pour une canalisation de remplissage d'un réservoir de carburant de véhicule automobile.

Une tête de remplissage se présente généralement sous la forme d'un logement ou d'un corps creux dont la face supérieure est ouverte dans une partie de la carrosserie du véhicule et dans lequel débouche l'extrémité libre de la canalisation de remplissage afin de permettre le remplissage du réservoir par introduction d'une lance de remplissage dans la canalisation.

L'orifice de la canalisation peut être obturé par un bouchon amovible, la face ouverte de la tête de remplissage étant elle-même éventuellement fermée par une trappe articulée.

Afin de supprimer le bouchon amovible, il a déjà été proposé comme par exemple dans le document FR-A-2529532 une tête de remplissage du type comportant un corps en forme de bol dont la face supérieure présente un orifice de remplissage et comportant un volet d'obturation monté pivotant par rapport au bol entre une position de repos vers laquelle il est rappelé élastiquement et dans laquelle il obture l'orifice de remplissage et une position effacée à l'intérieur du bol dans laquelle l'orifice de remplissage est dégagé et vers laquelle il est entraîné lors de l'introduction de la lance de remplissage dans l'orifice de remplissage.

Dans une conception connue d'un tel type de tête de remplissage, le volet d'obturation équipé d'un simple ressort de rappel en position d'obturation, n'est pas verrouillé dans cette dernière position, ou est équipé de moyens de verrouillage à commande positive du verrouillage ou dont l'ouverture dépend de l'ouverture de la trappe d'accès à la tête de remplissage.

L'utilisation d'un volet d'obturation ne comportant pas de moyens de verrouillage présente un risque d'introduction accidentelle d'éléments polluants dans le réservoir. Ceci est notamment le cas lorsque, au cours d'opérations de nettoyage du véhicule, on nettoie la trappe d'accès et la zone environnante de l'orifice de remplissage au moyen d'un jet d'eau ou de vapeur sous pression, cette pression pouvant être suffisante pour provoquer l'ouverture accidentelle du volet d'obturation.

Lorsque le volet est équipé d'un dispositif de verrouillage à commande externe, son verrouillage dépend alors d'une action positive de l'utilisateur et cette solution n'est pas entièrement satisfaisante dans la mesure où il existe un risque d'oubli des opérations de verrouillage par l'utilisateur.

Afin de remédier à ces inconvénients, l'invention propose une tête de remplissage telle que définie dans le préambule de la revendication 1 et du type divulgué dans le document FR-A-2529532 comportant des moyens de verrouillage automatique en position de repos du volet d'obturation comportant un organe de commande du déverrouillage, le volet d'obturation étant rappelé élastiquement en appui contre un siège formé autour de l'orifice de remplissage, les moyens de verrouillage comportant au moins un doigt de verrouillage monté mobile entre une position de verrouillage vers laquelle il est sollicité élastiquement et dans laquelle il s'étend en regard d'une portion de la face inférieure du volet, et une position de déverrouillage dans laquelle il est escamoté latéralement en retrait de ladite portion de la face inférieure du volet d'obturation, et l'organe de commande du déverrouillage commandant les déplacements du doigt de verrouillage à l'encontre des moyens élastiques qui le sollicitent caractérisé en ce que le doigt de verrouillage est agencé dans la partie centrale d'un bras de verrouillage dont une première extrémité est montée articulée par rapport au bol autour d'un axe perpendiculaire à la face supérieure du bol, qui entoure le bord latéral du volet d'obturation et dont la seconde extrémité comporte une surface de commande susceptible de coopérer avec une came de commande formée sur l'organe de commande.

La solution proposée selon l'invention permet donc d'assurer un verrouillage automatique du volet d'obturation, sans intervention de l'utilisation lors du retrait de la lance de distribution de carburant. La solution permet par ailleurs d'assurer un déverrouillage du volet d'obturation, avant l'introduction de la lance, par une action positive de l'utilisateur indépendante de toute autre action telle que par exemple celle nécessaire à la décondamnation de la trappe d'accès à la tête de remplissage.

Selon des modes de réalisation de l'invention :
- l'organe de commande est un poussoir de commande monté coulissant selon une direction perpendiculaire à la face supérieure du bol entre une position haute de verrouillage et une position basse de déverrouillage, et la came de commande est formée sur un bord latéral du poussoir;
- le poussoir présente des moyens d'entraînement par coopération de formes agencés entre le poussoir et le volet d'obturation ;
- les moyens d'entraînement comportent une crémaillère d'entraînement qui coopère avec un pignon d'entraînement dont la rotation est provoquée par le pivotement du volet d'obturation lors de sa course d'ouverture ;
- le poussoir est adjacent à l'axe de pivotement du volet d'obturation, le pignon d'entraînement est monté à rotation sur l'axe de pivotement du volet d'obturation, et il est prévu des moyens d'accouplement en rotation entre le pignon et le volet d'obturation qui autorisent un débattement angulaire relatif entre ces deux éléments;
- l'axe de pivotement du volet d'obturation est lié en rotation au volet et comporte une patte radiale d'accouplement qui s'étend dans une lumière en forme de secteur cylindrique qui est formée dans le pignon concentriquement au perçage de ce dernier traversé par l'axe de pivotement du volet d'obturation et dont l'angle qui détermine la valeur dudit débattement angulaire est sensiblement égal à l'angle de pivotement du volet d'obturation entre sa position de repos et sa position effacée, la rotation du pignon d'entraînement d'une valeur égale audit angle provoquant un déplacement du poussoir entre ses positions basse et haute ;
- la face inférieure du volet comporte un élément de butée agencé au droit de l'axe de pivotement du volet d'obturation et dont une face latérale coopère avec la surface de commande du bras de verrouillage portant le doigt de verrouillage pour maintenir ce dernier en position déverrouillée lorsque le volet d'obturation est dans sa position effacée et le poussoir est en position haute ;
- la face supérieure du bol est constituée par un couvercle dans lequel est formé l'orifice de remplissage et qui comporte un passage pour l'organe de commande du déverrouillage, et le volet d'obturation est articulé sur la face inférieure du couvercle.

D'autres caractéristiques et avantages de l'invention apparaîtront à la lecture de la description détaillée qui va suivre pour la compréhension de laquelle on se reportera aux dessins annexés dans lesquels :

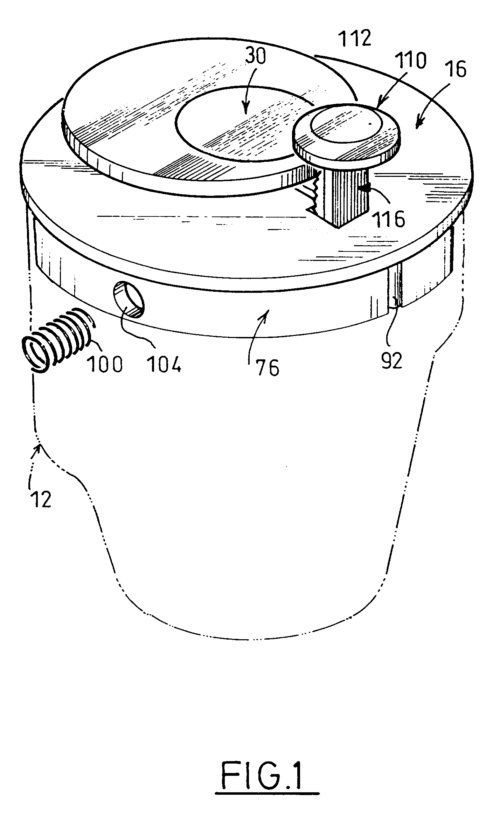

- La figure 1 est une vue schématique partielle en perspective des composants agencés à la partie supérieure de la tête de remplissage réalisée conformément aux enseignements de l'invention ;
- la figure 2 est une vue en section selon la ligne 2-2 de la figure 3 d'une tête de remplissage réalisée conformément aux enseignements de l'invention;
- la figure 3 est une vue en section selon la ligne 3-3 de la figure 2 ;
- la figure 4 est une vue en section selon la ligne 4-4 de la figure 2, le volet d'obturation étant illustré en positions fermée et verrouillée aux figures 2 à 4 ;
- les figures 5 et 6 sont des vues similaires à celles des figures 2 et 3 sur lesquelles le volet d'obturation est illustré en position fermée déverrouillée ;
- la figure 7 est une vue similaire à celle de la figure 3 dans laquelle le volet d'obturation est représenté en position ouverte effacée à l'intérieur de la tête de remplissage sous l'action d'une lance de distribution de carburant introduite dans la tête de remplissage ;
- les figures 8 à 10 sont des vues de détail selon les flèches F8 à F10 des figures 2, 5 et 7 illustrant la position relative du poussoir de commande par rapport aux surfaces de commande formées aux extrémités libres des bras de verrouillage ;
- la figure 11 est une vue partielle en perspective éclatée de certains des composants de la tête de remplissage, et notamment du couvercle, du volet d'obturation, d'un bras de verrouillage et du poussoir de commande ;
- la figure 12 est une vue en perspective du pignon en forme de secteur denté pour l'entraînement du poussoir ;
- la figure 13 est une vue en perspective illustrant l'axe de pivotement du volet d'obturation ; et
- la figure 14 est une vue en perspective illustrant le volet d'obturation équipé de certains de ses accessoires.

La tête de remplissage 10 illustrée sur les figures se compose pour l'essentiel d'un corps en forme générale de bol cylindrique creux 12 dont le fond comporte un trou d'évacuation 14 prévu pour être relié à l'extrémité supérieure d'une canalisation de remplissage d'un réservoir de carburant de véhicule automobile (non représentée), et d'un couvercle supérieur en forme générale de disque 16.

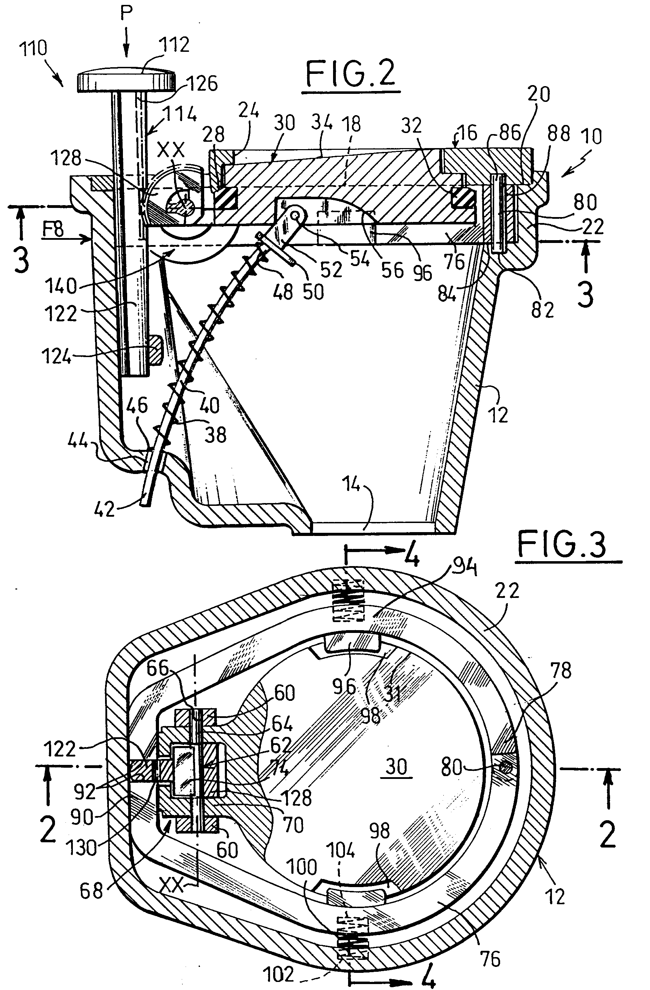

La tête de remplissage illustrée sur les figures présente une symétrie générale de conception et de réalisation selon le plan vertical médian indiqué par la ligne 2-2 de la figure 3.

La face inférieure 18 du couvercle 16 prend appui contre un épaulement 20 formé dans la paroi latérale en forme de jupe 22 du bol 12, au voisinage de la partie supérieure de cette dernière.

Le couvercle 16 est fixé, par des moyens non représentés, sur la face supérieure du bol 12, par exemple par soudage.

Le couvercle 16 comporte un orifice central de remplissage 24 qui possède un profil étagé délimitant un épaulement radial d'appui 26 tourné vers l'intérieur du bol 12 et un siège conique d'étanchéité 28.

La tête de remplissage comporte également un volet 30 d'obturation de l'orifice 24.

Le volet 30 est monté articulé sous le couvercle 16, par des moyens qui seront décrits en détail par la suite, autour d'un axe de pivotement X-X parallèle au plan du couvercle 16.

Le volet d'obturation comporte une garniture d'étanchéité réalisée sous la forme d'un joint torique 32 qui, dans la position d'obturation illustrée notamment à la figure 2, est en appui contre le siège 28.

La face supérieure 34 du volet d'obturation 30 est inclinée, vers la gauche en considérant la figure 2 par rapport au plan de la face inférieure 36 qui, en position d'obturation, est parallèle au plan de la face inférieure 18 du couvercle.

Selon une caractéristique connue, le volet d'obturation 30 est rappelé élastiquement vers sa position de repos et d'obturation par un ressort hélicoïdal de compression 38 qui est porté par une tige de guidage incurvée 40.

L'extrémité libre 42 de la tige 40 traverse un trou de guidage 44 formé au voisinage du fond du bol 12 et l'extrémité inférieure 46 du ressort 38 prend appui contre la surface intérieure du bol autour du trou 44.

L'extrémité supérieure 48 du ressort 38 prend appui contre une patte 50 d'une tête 52 d'articulation de la tige 40 sur la face inférieure 36 du volet d'obturation 30.

A cet effet, la tête 52 est montée pivotante autour d'un axe 54 et la face inférieure 36 comporte un évidement 56 pour permettre le mouvement de pivotement de la tête 52 autour de son axe 54.

Le ressort de rappel 38 sollicite ainsi en permanence le volet d'obturation 30 en rotation autour de l'axe X-X, dans le sens antihoraire en considérant la figure 2, en position d'appui étanche d'obturation de la garniture 32 contre le siège 28.

La face inférieure 18 du couvercle 16 comporte, comme on peut le voir sur la figure 11, deux pattes en saillie 60 comportant chacune un trou prévu pour recevoir une extrémité opposée d'un axe 62 d'articulation du volet d'obturation 30 sur le couvercle 16.

L'axe 62 comporte des portions d'extrémité cylindriques 64 qui sont montées à rotation dans les trous 66 formés dans les pattes 60.

L'axe 62 est lié en rotation avec le volet d'obturation 30, la partie d'articulation 68 de ce dernier comportant à cet effet deux pattes longitudinales parallèles 70 qui comportent chacune un palier ouvert d'articulation 72 permettant l'introduction des extrémités 64 de l'axe par emboîtement élastique dans ces paliers.

Le volet d'obturation 30 est ainsi monté pivotant autour de l'axe X-X et entraîne en rotation l'axe 62.

Comme on peut le voir notamment sur les figures 2, 3, 6, 7 et 13, le tronçon central de l'axe 62 comporte une patte radiale d'entraînement 74 dont la fonction sera décrite par la suite.

On décrira maintenant en détail les moyens de verrouillage du volet d'obturation 30 en position fermée ainsi que les moyens de commande de ces moyens de verrouillage.

La tête de remplissage comporte à cet effet deux bras de verrouillage 76 de forme générale incurvée dont chacun entoure le bord latéral sensiblement circulaire 31 du volet d'obturation 30 et s'étend dans un plan parallèle à la face supérieure de la tête de remplissage 10.

La première extrémité 78 de chaque bras de verrouillage est montée articulée autour d'un axe 80, perpendiculaire à l'axe X-X et à la face supérieure du bol 12, dont l'extrémité inférieure est reçue dans un logement 82 formé dans la paroi périphérique 22 du bol 12, et plus précisément dans une face d'appui 84 située à l'intérieur de cette dernière, et dont l'extrémité supérieure 86 est reçue dans un trou correspondant 88 formé dans la face inférieure 18 du couvercle.

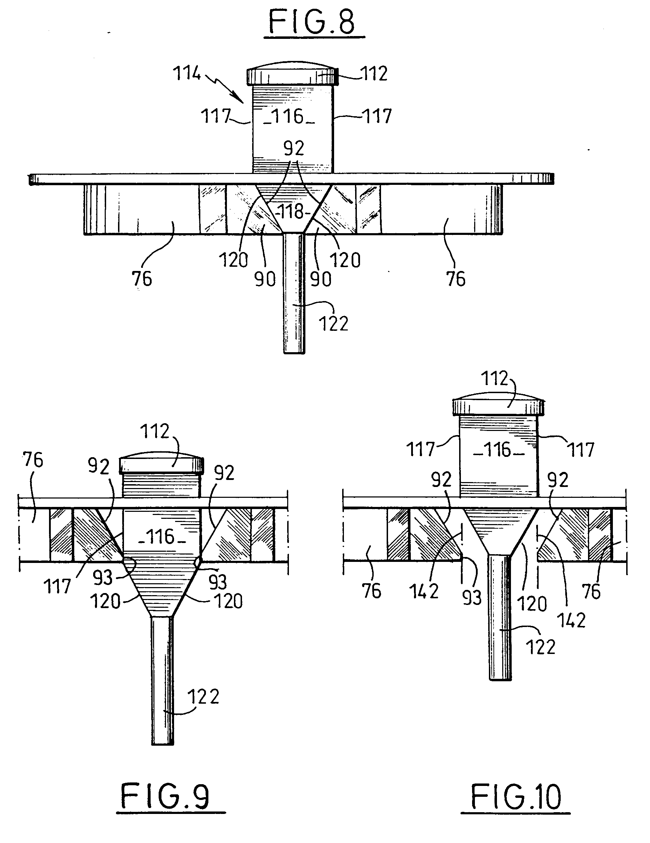

L'extrémité opposée 90 de chaque bras de verrouillage 76 comporte une surface de commande en forme de rampe inclinée 92 (voir figures 8 à 10), les deux surfaces 92 s'étendant en vis-à-vis l'une de l'autre.

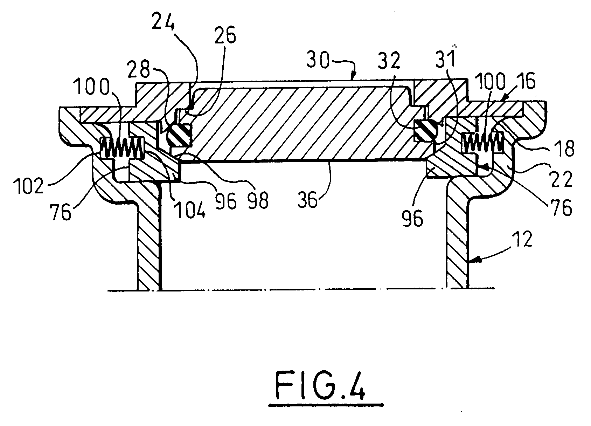

Chaque bras de verrouillage 76 comporte, dans sa partie centrale 94, un doigt de verrouillage 96 qui s'étend transversalement, c'est-à-dire en direction de l'axe général du bol 12 en dessous de la face inférieure 36 du volet d'obturation 30, lorsque ce dernier est dans sa position fermée illustrée aux figures 2 à 6.

A cet effet, la face inférieure 36 peut comporter des encoches ou méplats inclinés 98 qui s'étendent en regard des doigts de verrouillage 96.

Chaque bras de verrouillage 76 est sollicité élastiquement vers sa position de verrouillage positif illustrée aux figures 2 à 6, par un ressort de verrouillage 100 qui prend appui d'une part dans un logement complémentaire 102 formé par la paroi interne en vis-à-vis du bol 12 et, d'autre part dans un logement borgne 104 formé dans la partie médiane du bras 76.

Chaque ressort 100 est un ressort hélicoïdal de compression qui sollicite les doigts de verrouillage 96 vers le centre du bol et les rampes de commande 92 dans la direction correspondant à leur rapprochement mutuel.

Les deux ressorts 100 peuvent être remplacés par un ressort unique à lame entourant les bras de verrouillage 76 et dont les extrémités viennent en appui au droit des logements 102.

Conformément à l'invention, il est prévu un poussoir de commande 110 comportant une tête de commande 112 et un corps ou tige de poussoir 114.

Comme on peut le voir sur les figures 8 à 10, le corps 112 du poussoir comporte une partie supérieure de grande largeur et de section rectangulaire 116, une partie médiane de forme triangulaire 118 qui délimite deux cames latérales inclinées de commande 120 dont l'angle d'inclinaison est identique à l'angle d'inclinaison des rampes de commande 92 formées sur les extrémités 90 des bras de verrouillage 76, et une partie inférieure 122 en forme de tige cylindrique de guidage.

La tige de guidage 122 est reçue en coulissement dans une bague de guidage réalisée venue de moulage avec la paroi latérale du bol 12 de manière que le doigt de commande puisse coulisser selon une direction verticale perpendiculaire à l'axe X-X et parallèle à l'axe 80 d'articulation des bras de verrouillage 76.

Le poussoir 110 comporte des moyens d'entraînement par coopération de formes qui sont agencés entre ledit poussoir 110 et le volet d'obturation 30.

Selon une première variante, le corps 114 du poussoir comporte sur sa face interne tournée vers l'axe X-X une crémaillère d'entraînement 126 qui s'étend sur la hauteur du poussoir depuis la tête 112 jusqu'à la tige de guidage 122.

Les dents de la crémaillère 126 sont susceptibles de coopérer avec un pignon d'entraînement en forme de secteur denté 128.

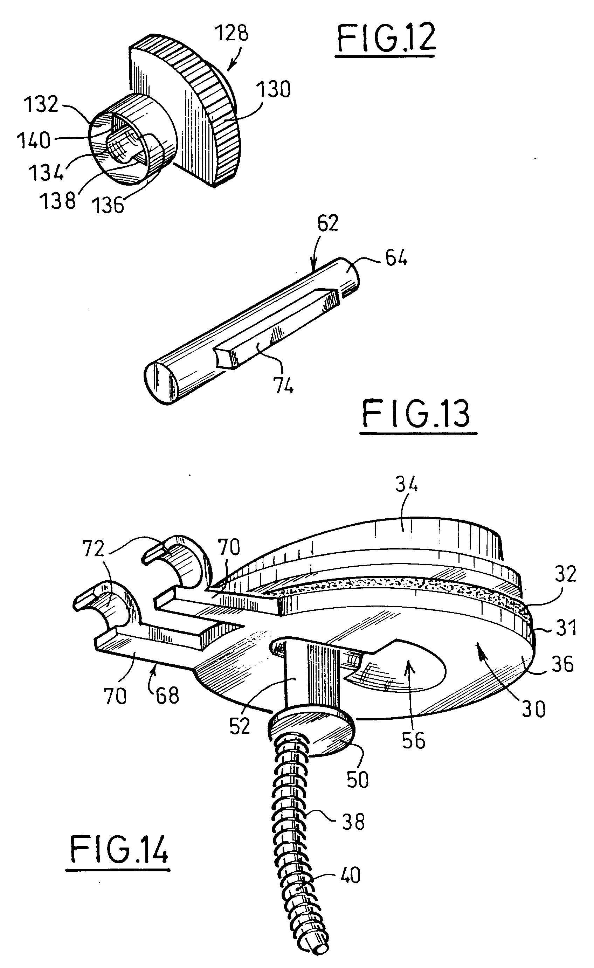

Comme on peut le voir notamment à la figure 12, le pignon 128 possède un secteur denté 130 qui s'étend sensiblement sur un arc de cercle de 90° d'angle et son moyeu 132 est percé d'une part d'un alésage 134 dont le diamètre est complémentaire du diamètre général de l'axe d'articulation 62, et est également percé d'une lumière en forme de secteur cylindrique creux 136 dans laquelle est reçue la patte d'entraînement 74.

Le pignon d'entraînement 128 peut ainsi pivoter autour de l'axe 62, et donc autour de l'axe X-X, pour un débattement angulaire possible entre ces deux éléments qui s'étend sur un secteur d'angle sensiblement égal à 90° qui est délimité par les faces radiales 138 et 140 de l'évidement cylindrique 136.

Les dents 130 du pignon d'entraînement 128 sont toujours en engrènement avec les dents 126 de la crémaillère du poussoir 110.

Le pignon 128 et la crémaillère 126 constituent ainsi les moyens d'entraînement du poussoir 110.

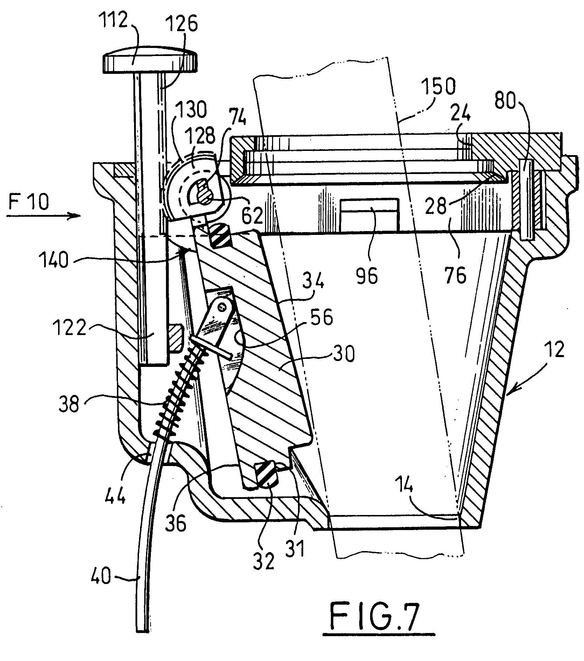

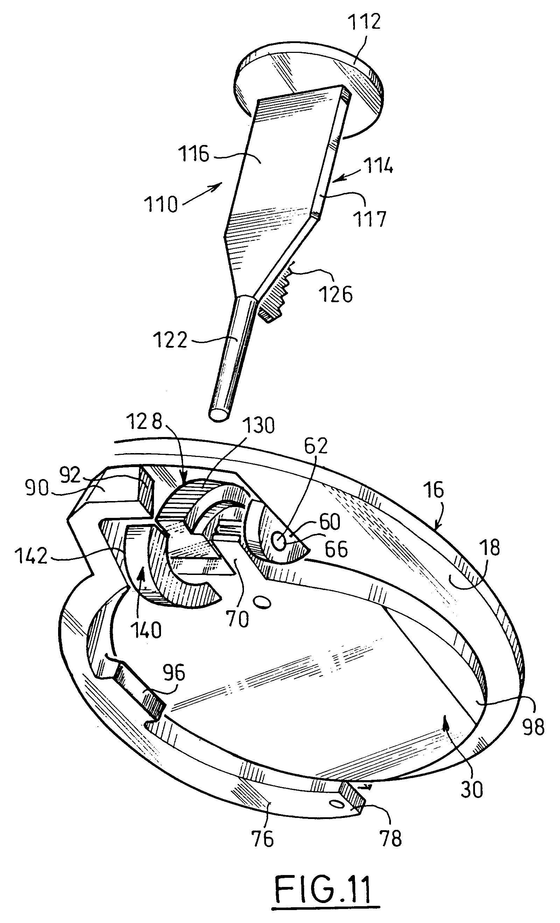

Enfin, la face inférieure de chacune des pattes 70 de la portion d'articulation 68 du volet d'obturation 30 comporte un organe de butée 140, dont un seul est illustré sur la figure 11 dont chacun comporte une face latérale extérieure 142 qui, en position effacée du volet d'obturation 30 est susceptible de coopérer avec le bord inférieur d'extrémité 93 de la rampe de commande associée 92 d'un bras 76 (voir figures 7 et 10).

On décrira maintenant le mode de fonctionnement de la tête de remplissage illustrée sur les figures.

Dans la position illustrée aux figures 2 et 3, le volet d'obturation 30 est en position fermée et verrouillée et le poussoir 110 est dans sa position haute.

Lorsqu'un utilisateur désire procéder au remplissage du réservoir de carburant, à l'aide d'une lance de distribution il commence par procéder au déverrouillage du volet d'obturation 30.

A cet effet, l'utilisateur exerce une pression sur la tête 112 du poussoir 110 selon la flèche P illustrée à la figure 2.

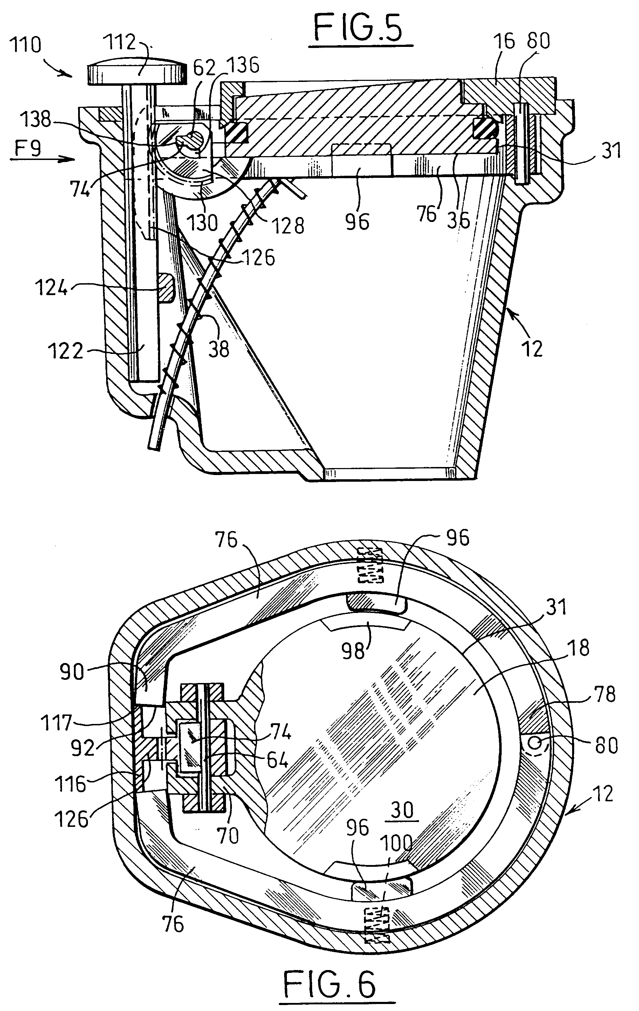

Cette pression a pour effet de provoquer un coulissement, vers le bas en considérant la figure 2, du poussoir 110 jusqu'à ce que celui-ci occupe sa position basse illustrée aux figures 5 et 9.

Ce mouvement de coulissement du poussoir 110 de sa position haute vers sa position basse, a pour effet de provoquer l'écartement des bras de verrouillage 76, illustrés dans leur position déverrouillée aux figures 5 et 6, par coopération des cames de commande inclinées 120 avec les rampes de commande 92, jusqu'à la position illustrée à la figure 9 dans laquelle les extrémités 93 des rampes 92 sont en appui sur les bords latéraux 117 de la portion supérieure de section rectangulaire 116 du poussoir 110.

Les doigts de verrouillage 96 sont alors escamotés par rapport à la face inférieure 36 du volet d'obturation 30 et celui-ci est libre de pivoter autour de l'axe X-X.

Le mouvement de descente du poussoir 110 a également provoqué la rotation d'environ 90° du pignon 128 par rapport à l'axe 62 et à la patte d'entraînement 74, cette dernière étant désormais en appui contre la face latérale 138 de l'évidement 136.

Les opérations de remplissage se poursuivent par introduction d'une lance de remplissage, illustrée en silhouette à la figure 7 et désignée par la référence 150.

Cette action d'introduction de la lance 150 provoque, du fait de la coopération de l'extrémité de la lance avec la face supérieure 34 du volet d'obturation 30, le pivotement de ce dernier autour de l'axe X-X dans le sens horaire en considérant les figures.

Le pivotement s'effectue à l'encontre de l'effort de rappel exercé par le ressort 38 et provoque simultanément l'entraînement en rotation du pignon 128 par l'intermédiaire de la patte d'entraînement 74 formée sur l'axe 62.

La rotation du pignon 128 provoque, du fait de la coopération des dents 130 avec la crémaillère 126, la remontée du poussoir 110, depuis sa position basse illustrée à la figure 5 jusqu'à sa position haute illustrée aux figures 7 et 10.

Le pivotement du volet d'obturation 30 provoque également la pénétration des faces latérales 142 des pièces de butée 140 agencées sous la face inférieure 36 du volet d'obturation 30 entre les extrémités 93 des rampes de commande 92 des bras 76 de manière que ces derniers restent dans leur position écartée correspondant au déverrouillage du volet, malgré la remontée du poussoir 110.

Les opérations de remplissage peuvent alors débuter dans la mesure où l'utilisateur a pu introduire la lance 150 dans le bol 12 et dans l'orifice inférieure 14 de ce dernier.

Lorsque le remplissage du réservoir est terminé, l'utilisateur retire la lance 150 du bol 12.

Dès que la lance est retirée, le ressort de rappel 38 provoque le retour en position haute fermée du volet d'obturation 30 qui pivote alors autour de l'axe X-X, dans le sens antihoraire, à partir de sa position illustrée à la figure 7.

Au cours de cette rotation, le pignon 128 n'est pas entraîné en rotation, et le poussoir de commande n'est pas déplacé et demeure dans sa position haute illustrée à la figure 7.

A la fin de la course de pivotement, les faces latérales 142 des organes de butée 140 se dégagent d'entre les extrémités 93 des rampes de commande 92 des bras radiaux 76, ces derniers étant alors rappelés automatiquement par les ressorts de verrouillage 100 vers leur position de verrouillage illustrée aux figures 2 et 3.

La fermeture automatique du volet d'obturation 30 provoque donc ainsi, en fin de course de fermeture, le verrouillage automatique du volet d'obturation qui est à nouveau dans sa position fermée et verrouillée illustrée notamment à la figure 2, le poussoir 110 étant également en position haute en vue d'une nouvelle opération de remplissage.

Aucune ouverture du volet d'obturation 30, même accidentelle, n'est possible sans une action volontaire sur le poussoir de commande 110.

Le poussoir de commande 110 est illustré ici sous la forme d'un poussoir à commande manuelle, mais il est bien entendu possible, sans sortir du cadre de la présente invention, de concevoir tout type de dispositif ou mécanisme de commande à distance du poussoir 110.

Par ailleurs, on comprend aisément qu'il est impossible que le volet d'obturation 30 reste en position fermée non verrouillé, dans la mesure où c'est le retour de celui-ci en position haute de fermeture qui provoque automatiquement son verrouillage en position fermée, sans nécessiter aucune action positive de la part de l'utilisateur.

On constate également qu'une opération de remplissage ne nécessite aucune opération manuelle de l'utilisateur sur un quelconque bouchon de fermeture de canalisation, opération habituelle et généralement salissante pour l'utilisateur et complexe à exécuter.

Le verrouillage en position fermée du volet d'obturation 30 est également complètement indépendant d'un quelconque verrouillage d'une trappe d'accès à la tête de remplissage.

L'effort d'introduction de la lance est également très faible dans la mesure où il suffit de vaincre l'effort du ressort de rappel 38, les efforts nécessaires au déverrouillage du volet d'obturation 30 étant indépendants de l'introduction de la lance 150.

Bien entendu, la présente invention ne se limite pas aux formes de réalisation décrites ou représentées mais englobe toutes variantes que l'homme de l'art pourrait y apporter.

En particulier les moyens d'entraînement du poussoir 110 peuvent être constitués par un axe remplaçant le pignon 128, ledit axe étant muni d'un doigt radial destiné à coopérer avec une rainure transversale ménagée dans la partie inférieure 122 du poussoir 110 sans pour cela sortir du cadre de l'invention.

## Revendications

1. Tête de remplissage pour une canalisation de remplissage d'un réservoir de carburant de véhicule automobile, du type comportant un corps en forme de bol (12) dont la face supérieure (16, 20) comporte un orifice de remplissage (24), et comportant un volet d'obturation (30) monté pivotant par rapport au bol (12) entre une position de repos vers laquelle il est rappelé élastiquement et dans laquelle il obture l'orifice de remplissage (24) et une position effacée à l'intérieur du bol (12) dans laquelle l'orifice de remplissage (24) est dégagé et vers laquelle il est entraîné lors de l'introduction d'une lance de remplissage (150) dans l'orifice de remplissage (24), et comportant des moyens (76, 96) de verrouillage automatique en position de repos du volet d'obturation (30) comportant un organe (110) de commande du déverrouillage, le volet d'obturation (30) étant rappelé élastiquement en appui contre un siège (28) formé autour de l'orifice de remplissage (24), les moyens de verrouillage comportant au moins un doigt de verrouillage (96) monté mobile entre une position de verrouillage vers laquelle il est sollicité élastiquement et dans laquelle il s'étend en regard d'une portion (98) de la face inférieure (36) du volet, et une positon de déverrouillage dans laquelle il est escamoté latéralement en retrait de ladite portion de la face inférieure du volet d'obturation, et l'organe de commande (110) du déverrouillage commandant les déplacements du doigt de verrouilllage (96) à l'encontre des moyens élastiques (100) qui le sollicitent, caractérisée en ce que le doigt de verrouillage (96) est agencé dans la partie centrale (94) d'un bras de verrouillage (76) dont une première extrémité (78) est montée articulée par rapport au bol (12) autour d'un axe (80) perpendiculaire à la face supérieure du bol (12), qui entoure le bord latéral du volet d'obturation (30) et dont la seconde extrémité (90) comporte une surface de commande (92) susceptible de coopérer avec une came de commande (120) formée sur l'organe de commande (150).

2. Tête de remplissage selon la revendication 1, caractérisée en ce que l'organe de commande (110) est un poussoir de commande monté coulissant selon une direction perpendiculaire à la face supérieure du bol entre une position haute de verrouillage et une position basse de déverrouillage, et en ce que la came de commande (120) est formée sur un bord latéral (117) du poussoir (110, 116).

3. Tête de remplissage selon la revendication 2, caractérisé en ce que le poussoir (110) présente des moyens d'entraînement par coopération de formes agencés entre le poussoir (110) et le volet d'obturation (30).

4. Tête de remplissage selon la revendication 3, caractérisée en ce que les moyens d'entraînement comportent une crémaillère d'entraînement (126) qui coopère avec un pignon d'entraînement (128, 130) dont la rotation est provoquée par le pivotement du volet d'obturation (30) lors de sa course d'ouverture.

5. Tête de remplissage selon la revendication 4, caractérisée en ce que le poussoir (110) est adjacent à l'axe de pivotement (62, 64, 74) du volet d'obturation (30), en ce que le pignon d'entraînement (128) est monté à rotation sur l'axe de pivotement (62) du volet d'obturation (30), et en ce qu'il est prévu des moyens (74, 136) d'accouplement en rotation entre le pignon (128) et le volet d'obturation (30) qui autorisent un débattement angulaire relatif entre ces deux éléments.

6. Tête de remplissage selon la revendication 5, caractérisée en ce que l'axe de pivotement (62) du volet d'obturation est lié en rotation au volet (30) et comporte une patte radiale d'accouplement (74) qui s'étend dans une lumière (136) en forme de secteur cylindrique qui est formée dans le pignon (128) concentriquement au perçage (134) de ce dernier traversé par l'axe de pivotement (62, 64) du volet d'obturation, dont l'angle qui détermine la valeur dudit débattement angulaire est sensiblement égal à l'angle de pivotement du volet d'obturation (30) entre sa position de repos et sa position effacée, la rotation du pignon d'entraînement (128) d'une valeur égale audit angle provoquant un déplacement du poussoir (110) entre ses positions basse et haute.

7. Tête de remplissage selon l'une des revendications 5 ou 6, caractérisée en ce que la face inférieure (36) du volet comporte un élément de butée (140) agencé au droit de l'axe de pivotement (X-X) du volet d'obturation (30) et dont une face latérale (142) coopère avec ladite surface de commande (92) du bras de verrouillage (76) portant le doigt de verrouillage (96) pour maintenir ce dernier en position déverrouillée lorsque le volet d'obturation (30) est dans sa position effacée et le poussoir en position haute.

8. Tête de remplissage selon l'une quelconque des revendications précédentes, caractérisée en ce que la face supérieure du bol est constituée par un couvercle (16) dans lequel est formé l'orifice de remplissage (24) et en ce que le volet d'obturation (30) est articulé sur la face inférieure (18) du couvercle (16).

## Claims

1. Filling head for a motor vehicle fuel tank filler pipe, of the type having a body in the shape of a bowl (12), the top face (16, 20) of which has a filling orifice (24), and having a closure flap (30) mounted so as to pivot with respect to the bowl (12) between an idle position to which it is returned elastically and in which it closes off the filling orifice (24), and a retracted position inside the bowl (12) in which the filling orifice (24) is left clear and towards which it is driven when a filling nozzle (150) is inserted in the filling orifice (24), and having means (76, 96) for automatically locking the closure flap (30) in the idle position, including a member (110) for controlling unlocking, the closure flap (30) being returned elastically in abutment against a seat (28) formed around the filling orifice (24), the locking means including at least one locking finger (96) mounted so as to be able to move between a locking position towards which it is forced elastically and in which it extends opposite a portion (98) of the bottom face (36) of the flap, and an unlocking position in which it is retracted laterally whilst being recessed with respect to the said portion of the bottom face of the closure flap, and the member (110) for controlling unlocking controlling the movements of the locking finger (96) counter to elastic means (100) which act on it, characterised in that the locking finger (96) is arranged in the central part (94) of a locking arm (76), a first end (78) of which is mounted so as to be articulated, with respect to the bowl (12), about a spindle (80) perpendicular to the top face of the bowl (12), which surrounds the lateral edge of the closure flap (30), and the second end (90) of which has a control surface (92) able to cooperate with a control cam (120) formed on the control member (150).

2. Filling head according to Claim 1, characterised in that the control member (110) is a control pusher mounted so as to slide in a direction perpendicular to the top face of the bowl between a high locking position and a low unlocking position, and in that the control cam (120) is formed on a lateral edge (117) of the pusher (110, 116).

3. Filling head according to Claim 2, characterised in that the pusher (110) has means of driving, through the cooperation of shapes, arranged between the pusher (110) and the closure flap (30).

4. Filling head according to Claim 3, characterised in that the driving means have a driving rack (126) which cooperates with a driving pinion (128, 130) whose rotation is caused by the pivoting of the closure flap (30) during its opening travel.

5. Filling head according to Claim 4, characterised in that the pusher (110) is adjacent to the pivot pin (62, 64, 74) of the closure flap (30), in that the driving pinion (128) is mounted so as to rotate on the pivot pin (62) of the closure flap (30), and in that means (74, 136) are provided for coupling the pinion (128) and the sealing flap (30) in rotation, which permit a relative angular movement between these two elements.

6. Filling head according to Claim 5, characterised in that the pivot pin (62) of the closure flap is rotationally connected to the flap (30) and has a radial coupling lug (74) which extends in an aperture (136) in the shape of a cylindrical sector which is formed in the pinion (128) concentrically with the hole (134) therein through which the pivot pin (62, 64) of the closure flap passes, whose angle which determines the value of the said angular movement is substantially equal to the angle of pivoting of the closure flap (30) between its idle position and its retracted position, the rotation of the driving pinion (128) by a value equal to the said angle causing a movement of the pusher (110) between its low and high positions.

7. Filling head according to one of Claims 5 or 6, characterised in that the bottom face (36) of the flap has a stop element (140) arranged in line with the pivot axis (X-X) of the closure flap (30) and a lateral face (142) of which cooperates with the said control surface (92) of the locking arm (76) carrying the locking finger (96) in order to hold the latter in the unlocked position when the closure flap (30) is in its retracted position and the pusher is in the high position.

8. Filling head according to any one of the preceding claims, characterised in that the top face of the bowl consists of a cover (16) in which the filling orifice (24) is formed and in that the closure flap (30) is articulated on the bottom face (18) of the cover (16).

## Patentansprüche

1. Füllkopf für ein Einfüllrohr des Kraftstofftanks eines Kraftfahrzeugs, mit einem Körper in Form einer Schale (12), deren Oberseite (16, 20) eine Einfüllöffnung (24) aufweist, und mit einer Verschlußklappe (30), die im Verhältnis zur Schale (12) schwenkbar zwischen einer Ruheposition, zu der sie elastisch zurückgestellt wird und in der sie die Einfüllöffnung (24) verschließt, und einer in das Innere der Schale (12) eingeklappten Position schwenkbar gelagert ist, in der die Einfüllöffnung (24) freigegeben ist und zu der sie beim Einsetzen des Zapfventils (150) in die Einfüllöffnung (24) bewegt wird, sowie mit Mitteln (76, 96) für eine automatische Verriegelung der Verschlußklape (30) in Ruheposition, mit einem Organ (110) zur Betätigung der Entriegelung, wobei die Verschlußklappe (30) elastisch in Anlage an einen Sitz (28) zurückgestellt wird, der um die Einfüllöffnung (24) herum ausgebildet ist, wobei die Verriegelungsmittel mindestens einen Verriegelungsfinger (96) umfassen, der beweglich zwischen einer Verriegelungsposition, zu der er elastisch beaufschlagt wird und in der er sich gegenüber einem Abschnitt (98) der Unterseite (36) der Verschlußklappe erstreckt, und einer Entriegelungsposition gelagert ist, in der er seitlich hinter dem besagten Abschnitt der Unterseite der Verschlußklappe zurückspringend eingeklappt wird, und wobei das Organ (110) zur Betätigung der Entriegelung die Verschiebungen des Verriegelungsfingers (96) entgegen elastischen Mitteln (100) betätigt, durch die er beaufschlagt wird , **dadurch gekennzeichnet,** daß der Verriegelungsfinger (96) im Mittelteil (94) eines Verriegelungsarms (76) angeordnet ist, dessen erstes Ende (78) im Verhältnis zur Schale (12) schwenkbar um einen Gelenkbolzen (80) gelagert ist, der senkrecht zur Oberseite der Schale (12) verläuft, welche die Seitenkante der Verschlußklappe (30) umgibt, und dessen zweites Ende (90) eine Betätigungsfläche (92) umfaßt, die mit einem Betätigungsnocken (120) zusammenwirken kann, der auf dem Betätigungsorgan (150) ausgebildet ist.

2. Füllkopf nach Anspruch 1 , **dadurch gekennzeichnet,** daß das Betätigungsorgan (110) ein Betätigungsstößel ist, der entlang einer zur Oberseite der Schale senkrechten Richtung verschiebbar zwischen einer oberen Verriegelungsposition und einer unteren Entriegelungsposition gelagert ist, und daß der Betätigungsnocken (120) an einer Seitenkante (117) des Stößels (110, 116) ausgebildet ist.

3. Füllkopf nach Anspruch 2 , **dadurch gekennzeichnet,** daß der Stößel (110) durch formschlüssiges Zusammenwirken ausgeführte Antriebsmittel aufweist, die zwischen dem Stößel (110) und der Verschlußklappe (30) angeordnet sind.

4. Füllkopf nach Anspruch 3 , **dadurch gekennzeichnet,** daß die Antriebsmittel eine Antriebszahnstange (126) umfassen, die mit einem Antriebsritzel (128, 130) zusammenwirkt, dessen Drehung durch das Schwenken der Verschlußklappe (30) bei ihrer Öffnungsbewegung bewirkt wird.

5. Füllkopf nach Anspruch 4 , **dadurch gekennzeichnet,** daß der Stößel (110) an den Schwenkbolzen (62, 64, 74) der Verschlußklappe (30) angrenzt, daß das Antriebsritzel (128) drehbar am Schwenkbolzen (62) der Verschlußklappe (30) gelagert ist und daß Mittel (74, 136) für eine drehfeste Verbindung zwischen dem Ritzel (128) und der Verschlußklappe (30) vorgesehen sind, die eine relative Winkelauslenkung zwischen diesen beiden Elementen zulassen.

6. Füllkopf nach Anspruch 5 , **dadurch gekennzeichnet,** daß der Schwenkbolzen (62) der Verschlußklappe drehfest mit der Verschlußklappe (30) verbunden ist und einen radialen Verbindungsansatz (74) umfaßt, der sich in einem Schlitzloch (136) in Form eines Zylindersektors erstreckt, das im Ritzel (128) konzentrisch zu dessen Bohrung (134) ausgebildet ist, durch die der Schwenkbolzen (62, 64) der Verschlußklappe hindurchgeht, und dessen Winkel, der den Wert der besagten Winkelauslenkung bestimmt, in etwa gleich dem Schwenkwinkel der Verschlußklappe (30) zwischen ihrer Ruheposition und ihrer eingeklappten Position ist, wobei die Drehung des Antriebsritzels (128) um einen Wert gleich dem besagten Winkel eine Verschiebung des Stößels (110) zwischen seiner unteren und oberen Position bewirkt.

7. Füllkopf nach einem der Ansprüche 5 oder 6 , **dadurch gekennzeichnet,** daß die Unterseite (36) der Verschlußklappe ein Anschlagelement (140) umfaßt, das in Höhe der Schwenkachse (X-X) der Verschlußklappe (30) angeordnet ist und von dem eine Seitenfläche (142) mit der Betätigungsfläche (92) des Verriegelungsarms (76) zusammenwirkt, der den Verriegelungsfinger (96) trägt, um diesen in Entriegelungsposition zu halten, wenn sich die Verschlußklappe (30) in ihrer eingeklappten Position und der Stößel in der oberen Position befindet.

8. Füllkopf nach einem der vorangehenden Ansprüche, **dadurch gekennzeichnet,** daß die Oberseite der Schale aus einem Deckel (16) besteht, in den die Einfüllöffnung (24) eingearbeitet ist, und daß die Verschlußklappe (30) an der Unterseite (18) des Deckels (16) angelenkt ist.
